# FASCICULE DE BREVET EUROPEEN

(11) **EP 2 283 737 B1**
(45) Date de publication et mention de la délivrance du brevet: **09.05.2012**
(21) Numéro de dépôt: 10167515.5
(22) Date de dépôt: 28.06.2010
(51) Int. Cl.: A23N 1/00, B30B 9/22

(54) **Pressoir pneumatique pour séparer les parties solide et liquide d'une matière**
Pneumatische Presse zum Abscheiden fester und flussiger Teile einer Masse
Pneumatic press for separating the solid part from the liquid one of a mass

(30) Priorité: 24.07.2009 FR 0903647
(43) Date de publication de la demande: 16.02.2011
(73) Titulaire: Bucher Vaslin, 49290 Chalonnes sur Loire (FR)
(72) Inventeur: Kervarec, Emmanuel, 49000 Angers (FR); Pajot, Hervé, 49000 Angers (FR)
(74) Mandataire: Godineau, Valérie

(56) Documents cités:
- EP-A- 2 062 725
- WO-A-2004/033192
- WO-A-2005/051642

## Description

La présente invention concerne un pressoir, de préférence pneumatique, pour séparer les parties solide et liquide, encore appelées jus, d'une matière, telle que de la vendange.

Elle concerne plus particulièrement un pressoir comportant une cuve présentant une paroi latérale cylindrique fermée à ses deux extrémités opposées par un flasque, un châssis support sur lequel la cuve est disposée à l'horizontale et est montée à rotation autour de son axe longitudinal, des moyens de drainage des jus contenus dans la cuve, et des moyens de sortie des jus en communication fluidique avec lesdits moyens de drainage, ces moyens de sortie des jus étant raccordables à un réservoir de collecte pour un transfert des jus quittant la cuve par lesdits moyens de drainage vers ledit réservoir de collecte, où les moyens de sortie des jus comprennent des moyens de sortie de jus, dits permanents, comportant au moins un raccord tournant disposé au niveau de l'axe de rotation de la cuve, ce raccord tournant comportant au moins deux orifices, l'un pour le raccordement aux moyens de drainage, l'autre apte à être raccordé au réservoir de collecte, ainsi qu'une installation comprenant un pressoir du type précité et un réservoir de collecte raccordable aux moyens de sortie de jus du pressoir.

Les cuves de pressoir, notamment les cuves rotatives de pressoir pneumatique, comportent généralement une membrane séparant la cuve en une chambre de commande équipée d'une arrivée d'air ou de gaz pour le gonflage de la membrane et une chambre de pressurage comportant au moins une arrivée de la matière à presser et une sortie de jus issu du pressage.

De plus en plus, le pressurage s'effectue en atmosphère inerte, sans oxygène, pour éviter l'oxydation du moût. La sortie de jus s'effectue, après pressage, à travers des moyens de drainage qui se présentent généralement sous forme de canaux longitudinaux formés au moyen d'éléments profilés ajourés sur la face interne de la paroi de la cuve en s'étendant suivant les génératrices de ladite cuve. Ces éléments profilés forment également un tamis de filtrage du fait de la présence d'orifices, tels que trous ou fentes, ménagés dans leur paroi.

Il existe aujourd'hui deux possibilités de sortie du jus à travers les moyens de drainage. La première possibilité est décrite par exemple dans le brevet FR-2.924.050 ou le brevet EP 2.062.725. Dans ce cas, la cuve est équipée, au niveau de sa paroi latérale, d'un dispositif de soutirage comportant un orifice de sortie apte à venir en contact étanche avec un dispositif de prise de liquide dans une position angulaire prédéterminée, dite de pressurage, de la cuve. L'avantage d'un tel dispositif de soutirage en position basse de la cuve est qu'il permet un écoulement des jus libres dès le début du remplissage de la cuve et évite une macération non désirée. L'inconvénient d'une telle solution est que cette connexion ne peut s'opérer qu'à l'état non entraîné en rotation de la cuve et dans une position angulaire prédéterminée de la cuve. Cette connexion discontinue induit des effets de surpression et de dépression dans le circuit de vidange qui gênent l'écoulement des jus et les échanges gazeux. Pour obtenir un écoulement homogène et sans à-coup des jus, il est nécessaire de disposer d'un évent ou valve de décharge, ce qui est incompatible avec une bonne étanchéité de l'ensemble. La qualité de l'inertage est donc moins moindre en raison d'un taux d'oxygène plus élevé. En effet, il doit être rappelé que l'objectif d'un pressoir sous gaz neutre est de préserver la qualité aromatique des jus grâce à l'extraction des jus sous un gaz sans oxygène. L'étanchéité entre l'ensemble du pressoir et l'atmosphère est donc importante pour obtenir un travail de qualité.

Il existe également une possibilité de faire écouler les jus du pressoir par une connexion continue permanente passant par l'axe du pressoir, comme l'illustre le brevet FR-2.919.221 ou la demande internationale WO 2004033192. L'inconvénient d'une telle solution résulte du fait que, comme les jus s'écoulent par l'axe, il faut attendre que la moitié de la cuve soit remplie pour commencer à écouler les jus libres.

Un but de la présente invention est donc de proposer un pressoir dont la conception permet d'obtenir un écoulement des jus sans à-coup en partie basse de la cuve, sans nuire à la qualité de l'inertage à l'intérieur de la cuve.

Un autre but de la présente invention est de proposer un pressoir et une installation intégrant un tel pressoir dont les conceptions permettent de récupérer, en partie basse de la cuve, les jus sous forme d'un flux de fluide homogène et sans à-coup, sans que ces jus ne soient mis en contact avec l'air.

A cet effet, l'invention a pour objet un pressoir, de préférence pneumatique, pour séparer les parties solide et liquide, encore appelée jus, d'une matière, telle que de la vendange, ledit pressoir comportant une cuve présentant une paroi latérale cylindrique fermée à ses deux extrémités opposées par un flasque, un châssis support sur lequel la cuve est disposée à l'horizontale et est montée à rotation autour de son axe longitudinal, des moyens de drainage des jus contenus dans la cuve et, des moyens de sortie des jus en communication fluidique avec lesdits moyens de drainage, ces moyens de sortie des jus étant raccordables à un réservoir de collecte pour un transfert des jus quittant la cuve par lesdits moyens de drainage vers ledit réservoir de collecte, où les moyens de sortie des jus comprennent des moyens de sortie de jus, dits permanents, comportant au moins un raccord tournant disposé au niveau de l'axe de rotation de la cuve, ce raccord tournant comportant au moins deux orifices, l'un (15) pour le raccordement aux moyens de drainage, l'autre apte à être raccordé au réservoir de collecte, caractérisé en ce que les moyens de sortie des jus comprennent aussi des moyens de sortie de jus, dits intermittents, comportant au moins une ouverture de sortie obturable, désaxée, positionnable en un point bas de la cuve dans une position angulaire prédéterminée, dite position de pressurage, de la cuve en vue de former une sortie de fluide au moins par écoulement gravitaire.

Le fait d'avoir deux moyens de sortie de jus (moyen de sortie de jus intermittent par connexion en un point bas) et (moyen de sortie de jus permanent avec sortie axiale) permet de séparer les fonctions d'écoulement du jus et d'équilibrer des pressions rendant chacun d'entre eux plus performants. La présence de moyens de sortie de jus permanents raccordables au réservoir de collecte, quelle que soit la position angulaire de la cuve, et donc à l'état entraîné en rotation de la cuve, permet en effet un équilibrage des pressions entre cuve et réservoir de collecte. Cet équilibrage des pressions permet d'observer un écoulement gravitaire plus homogène sans à-coup au niveau des moyens de sortie de jus intermittents raccordables au réservoir de collecte dans la ou une position angulaire prédéterminée de pressurage de la cuve, à l'état non entraîné en rotation de cette dernière. L'équilibre des pressions entre la cuve du pressoir et le réservoir de collecte ou maie est important pour le bon fonctionnement de l'extraction et pour préserver la qualité des jus extraits. Dans le cas contraire, des échanges avec l'atmosphère sont nécessaire venant dégrader la qualité du gaz et donc la qualité du jus. Enfin, la fonction d'écoulement par le point bas de la cuve permet d'extraire au plus tôt les jus évitant ainsi toute macération non désirée. Par ailleurs, cette information relative aux premiers écoulements du jus est importante pour optimiser les cycles de pressurage, en particulier les phases de pressurage et d'émiettage au sein d'un cycle.

Selon une réalisation préférée de l'invention, les moyens de drainage se présentent sous forme d'au moins une goulotte ou portion de conduit analogue, allongée, ajourée, montée dans la cuve le long d'une génératrice de la cuve, dans une zone angulaire de la cuve formant la partie inférieure de la cuve, lorsque la cuve occupe une position prédéterminée de pressurage, pour former un canal longitudinal de drainage pour les jus extraits de la matière pressée, le ou chaque canal longitudinal de drainage étant en communication fluidique avec les moyens de sortie de jus permanents et/ou les moyens de sortie de jus intermittents.

De préférence, les moyens de drainage comportent au moins deux, de préférence une pluralité de, canaux de drainage longitudinaux, au moins l'un des canaux de drainage étant en communication fluidique à la fois avec les moyens de sortie de jus intermittents et les moyens de sortie de jus permanents.

Dans ce mode de réalisation, de préférence, au moins certains des canaux de drainage, de préférence les canaux de drainage les plus proches de la ou des ouvertures de sortie des moyens de sortie de jus intermittents sont en communication fluidique à la fois avec les moyens de sortie de jus intermittents et les moyens de sortie de jus permanents, le ou les autres canaux étant en communication fluidique uniquement avec les moyens de sortie de jus permanents.

Généralement, lorsque le pressoir est du type comportant au moins deux canaux de drainage longitudinaux sensiblement parallèles, les canaux de drainage sont en communication fluidique avec la ou chaque ouverture de sortie désaxée desdits moyens de sortie de jus intermittents par l'intermédiaire d'un collecteur périphérique à la cuve se présentant sous forme d'un conduit du genre goulotte s'étendant sur le pourtour de la cuve sur une partie de la circonférence de la cuve, de préférence en saillie de la paroi latérale de la cuve, ce conduit collecteur en communication fluidique avec les conduits de drainage par sa face tournée vers la cuve portant sur sa face, opposée à celle tournée vers la cuve, la ou les ouvertures de sortie désaxée(s) des moyens de sortie de jus intermittents, la ou chaque ouverture de sortie formant une ouverture de sortie radiale à ladite cuve.

De préférence, lorsque le pressoir est un pressoir pneumatique, à membrane, ladite membrane divisant la cuve en une chambre de pressurage contenant les moyens de drainage et une chambre de commande, les moyens de sortie de jus intermittents comportent, réparties circonférentiellement, au moins deux ouvertures de sortie obturables, désaxées, positionnables chacune en un point bas de la cuve dans une position angulaire prédéterminée, dite position de pressurage, de la cuve en vue de former une sortie de fluide au moins par écoulement gravitaire, et le collecteur s'étend sur le pourtour de la cuve à cheval sur la chambre de commande et la chambre de pressurage, lesdites ouvertures de sortie désaxées étant disposées sur le collecteur, l'une en regard de la chambre de commande, l'autre en regard de la chambre de pressurage.

De préférence, le ou au moins l'un des canaux de drainage est en communication fluidique avec les moyens de sortie de jus permanents de la cuve par l'intermédiaire d'un conduit intermédiaire s'étendant radialement le long d'un flasque de la cuve, ce conduit intermédiaire se raccordant à l'une de ses extrémités au raccord tournant et à son autre extrémité au canal de drainage.

Le pressoir comporte, monté sur le châssis support de cuve, un connecteur se présentant sous forme d'une pièce tubulaire comportant au moins deux ouvertures, l'une raccordable au réservoir de collecte, l'autre positionnée en regard de l'ouverture ou de l'une des ouvertures désaxée(s) de sortie des moyens de sortie de jus intermittents de la cuve quand la cuve occupe la ou une position prédéterminée de pressurage, cette ouverture du connecteur, raccordable à la ou chaque ouverture de sortie désaxée des moyens de sortie de jus intermittents, étant munie d'au moins un joint torique gonflable apte, à l'état gonflé, à entourer à contact d'appui l'ouverture de sortie désaxée de la cuve disposée en regard.

De préférence, le raccord tournant des moyens de sortie de jus permanents est pourvu de moyens de montage amovibles d'un dispositif d'amenée de la matière à presser, le dispositif d'amenée formant, dans son état monté, avec le raccord tournant, une chambre annulaire d'écoulement des jus.

L'invention a encore pour objet, une installation du type comprenant un pressoir équipé de moyens de sortie de jus et un réservoir de collecte raccordable aux moyens de sortie de jus du pressoir, caractérisé en ce que le pressoir du type précité comporte des moyens de sortie de jus, dits intermittents, et des moyens de sortie des jus, dits permanents, la zone de raccordement des moyens de sortie des jus, dits permanents, au réservoir de collecte étant disposée sur le réservoir de collecte à un niveau supérieur à la zone de raccordement des moyens de sortie de jus, dits intermittents, audit réservoir de collecte. En d'autres termes, des moyens de sortie des jus, dits permanents, sont raccordables en un point haut du réservoir de collecte en vue de permettre un équilibrage des pressions entre réservoir de collecte et cuve tandis que les moyens de sortie de jus, dits intermittents, sont, à l'état non entraîné en rotation de la cuve, raccordables en un point du réservoir de collecte disposé à un niveau inférieur au point de raccordement des moyens de sortie de jus dits permanents audit réservoir.

L'invention sera bien comprise à la lecture de la description suivante d'exemples de réalisation, en référence aux dessins annexés dans lesquels :

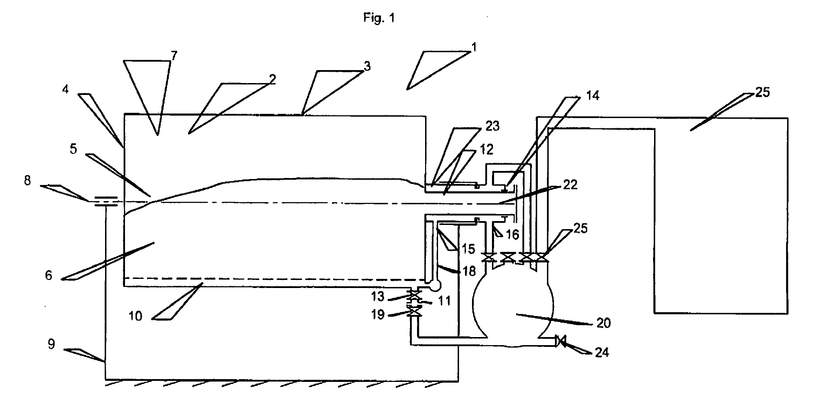

la figure 1 représente une vue schématique d'une installation conforme à l'invention ;

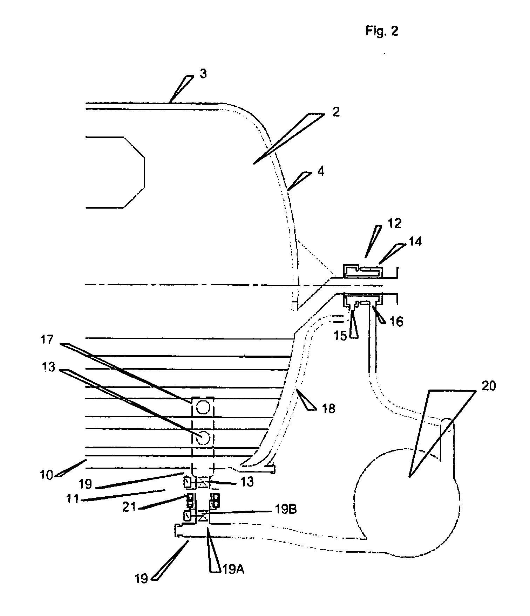

la figure 2 représente une vue partielle en coupe de la cuve côté zone de raccordement de la cuve à un réservoir de collecte ;

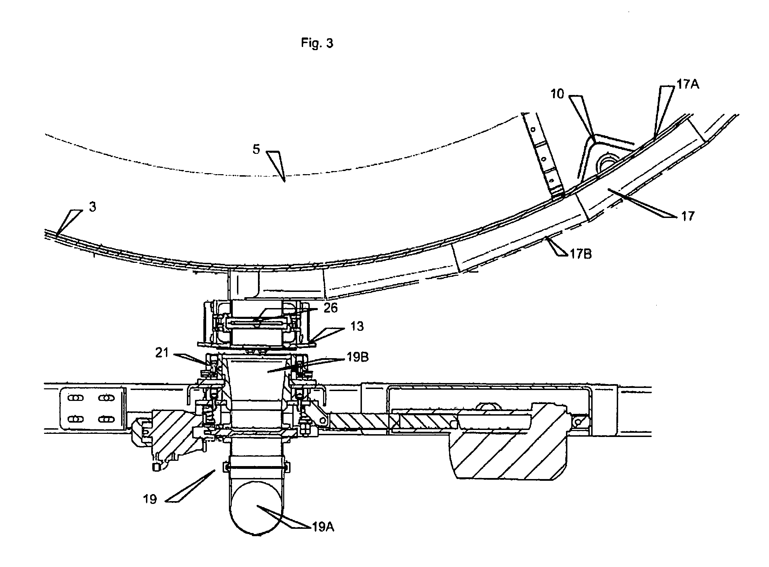

la figure 3 représente une vue de détail des moyens de sortie de jus intermittents du collecteur, et du connecteur pour un raccordement au réservoir de collecte et
la figure 4 représente une vue de côté de la cuve prise côté raccord tournant.

Comme mentionné ci-dessus, le pressoir 1, objet de l'invention, est destiné à séparer les parties solide et liquide, encore appelée jus, d'une matière, telle que de la vendange. Ce pressoir 1 comporte une cuve 2 délimitée par une paroi 3 latérale et deux flasques 4 d'extrémité. Généralement, la paroi 3 latérale comporte une ouverture fermée par une trappe ou porte pour l'alimentation en matière de ladite cuve 2. Cette cuve 1, disposée à l'horizontale est supportée à rotation par un châssis 9 support. Ce châssis 9 support comporte par exemple deux potelets portant chacun un palier coopérant avec un tourillon de la cuve disposé au centre du flasque 4 de chaque cuve. Le tourillon de l'un des flasques forme ici une tubulure d'entrée d'air de la cuve. En effet, la cuve 2 est une cuve rotative à membrane 5. La membrane 5 est équipée sur son pourtour de moyens d'ancrage à la cuve, en particulier au voisinage du plan longitudinal médian de la cuve. La membrane 5 divise la cuve 2 en une chambre 7 de commande et une chambre 6 de pressurage. La tubulure d'entrée d'air dans la cuve équipant l'un des flasques débouche donc dans la chambre 7 de commande et permet soit l'aspiration de l'air contenu dans la chambre, en particulier pendant les phases de remplissage, d'émiettage et de vidage de la cuve, soit l'admission dans cette chambre d'air comprimé, en particulier pendant les phases de pressurage. La chambre 6 de pressurage contient quant à elle des moyens 10 de drainage des jus contenus dans la cuve 2 se présentant généralement sous forme de canaux longitudinaux de drainage et des moyens 11, 12 de sortie des jus en communication fluidique avec lesdits moyens 10 de drainage, ces moyens 11, 12 de sortie des jus étant raccordables à un réservoir 20 de collecte pour un transfert des jus quittant la cuve par lesdits moyens 10 de drainage vers ledit réservoir 20 de collecte. Ces moyens 11, 12 de sortie de jus comprennent à la fois des moyens 11 de sortie de jus, dits intermittents, c'est-à-dire raccordables de manière discontinue à la cuve, le raccordement étant apte à s'opérer à l'état non entraîné en rotation de la cuve lorsque la cuve occupe une position angulaire prédéterminée, dite de pressurage, et des moyens 12 de sortie de jus, dits permanents, c'est-à-dire raccordables au réservoir 20 de collecte quelle que soit la position angulaire prise par la cuve et en particulier à l'état entraîné en rotation de la cuve. Comme mentionné ci-dessus, ces moyens 12 de sortie de jus permanents comportent au moins un raccord 14 tournant disposé au niveau de l'axe de rotation de la cuve 2. Ce raccord 14 tournant comporte au moins deux orifices, l'un représenté en 15 aux figures, pour le raccordement aux moyens 10 de drainage, l'autre, représenté en 16 aux figures, apte à être raccordé au réservoir 20 de collecte.

Le raccord 14 tournant peut être réalisé de manière similaire à ce qui est décrit dans le brevet FR-2.919.221. Ce raccord 14 tournant peut ainsi se présenter sous la forme de deux portions tubulaires reliées entre elles par un palier tournant. L'une des portions tubulaires solidaire en rotation de la cuve comporte, sur sa paroi latérale, l'orifice 15 de raccordement aux moyens 10 de drainage et est reliée fluidiquement par une conduite 18 intermédiaire s'étendant radialement au flasque 4 de la cuve auxdits moyens 10 de drainage. L'autre des portions tubulaires du raccord tournant est munie, sur sa paroi, d'un orifice de sortie de jus raccordable au réservoir 20 de collecte, en particulier en un point haut de ce dernier par un conduit souple. Ce raccord 14 tournant peut comporter des moyens de montage amovibles d'un dispositif 22 d'amenée de la matière à presser, le dispositif 22 d'amenée formant, dans son état monté, avec le raccord 14 tournant, une chambre 23 annulaire d'écoulement des jus. Le dispositif 22 d'amenée de la matière à presser, quand il est présent, se présente quant à lui sous la forme d'une conduite apte à être disposée, depuis l'intérieur du corps cylindrique formant la cuve, dans le conduit formé par les deux portions tubulaires du raccord tournant de manière coaxiale à ce conduit. Cette conduite formant le dispositif d'amenée de la matière à presser présente une bride pour sa fixation sur la première portion tubulaire du raccord 14 tournant des moyens de sortie de jus permanents.

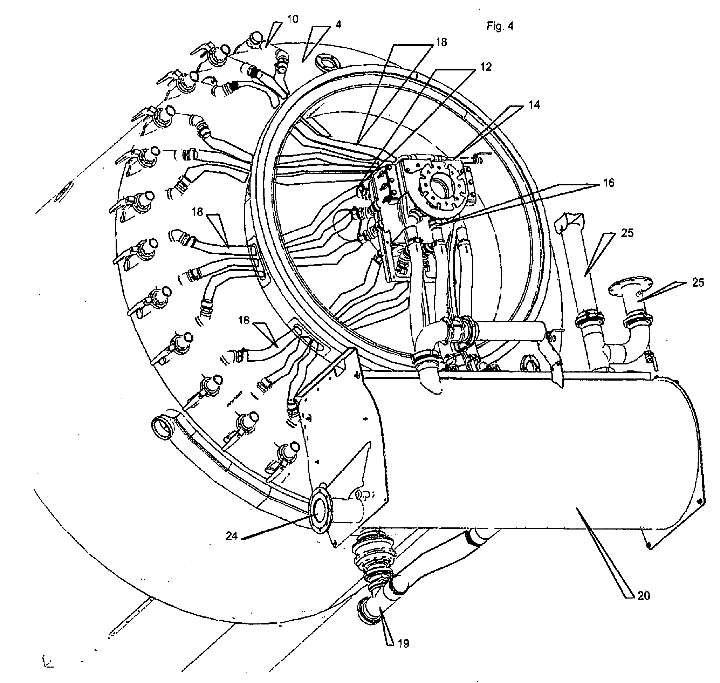

Lorsque les moyens 10 de drainage sont formés d'une pluralité de canaux de drainage longitudinaux s'étendant sensiblement parallèlement entre eux et le long d'une génératrice de la cuve, chaque canal de drainage, devant être en communication fluidique avec le raccord 14 tournant, est relié à ce dernier par un conduit 18 intermédiaire de sorte que le flasque de la cuve côté raccord tournant peut comporter une pluralité de conduits 18 intermédiaires convergeant en direction du raccord 14 tournant comme l'illustre la figure 4. Les moyens 11 de sortie de jus intermittents comportent quant à eux au moins une ouverture 13 de sortie obturable, désaxée, par rapport à l'axe de rotation de la cuve et positionnable en un point bas de la cuve 2 dans une position angulaire prédéterminée, dite position de pressurage de la cuve, en vue de former une sortie de vidange de la cuve au moins par écoulement gravitaire. Dans les exemples représentés, la cuve comporte trois ouvertures 13 de sortie désaxées réparties circonférentiellement autour de la cuve. Comme détaillé ci-après, les trois ouvertures sont regroupées par un collecteur extérieur obturable 17 correspondant à une position de pressurage. Chaque ouverture 13 de sortie est obturable à l'aide d'une vanne apte à passer d'une position fermée à une position ouverte et inversement. Pour permettre une sortie de jus sans amener d'air dans la cuve, le pressoir comporte, monté sur le châssis 9 support de cuve, un connecteur 19 se présentant sous forme d'une pièce tubulaire comportant au moins deux ouvertures 19A, 19B, l'une 19A raccordable au réservoir 20 de collecte, l'autre 19B positionnée en regard de l'ouverture 13 ou de l'une des ouvertures 13 désaxée(s) de sortie des moyens 11 de sortie de jus intermittents de la cuve quand la cuve 2 occupe la ou une position prédéterminée de pressurage, cette ouverture 19B du connecteur 19, raccordable à la ou chaque ouverture 13 de sortie désaxée des moyens 11 de sortie de jus intermittents, étant munie d'au moins un joint 21 torique gonflable apte, à l'état gonflé, à entourer à contact d'appui l'ouverture 13 de sortie désaxée de la cuve amenée en regard de l'ouverture 19B du connecteur 19.

Le pressoir comporte, pour l'entraînement en rotation de la cuve et l'actionnement de la membrane, des moyens de pilotage qui contrôlent en outre que le soutirage ne s'opère qu'à l'état non entraîné en rotation de la cuve et lorsque la ou une ouverture 13 de sortie désaxée de la cuve est en regard du connecteur. De la même manière, la reprise de l'entraînement en rotation de la cuve ne peut s'opérer que si l'organe d'obturation 26, tel qu'une vanne, équipant la ou chaque ouverture 13 de sortie désaxée des moyens 11 de sortie de jus intermittents est en position fermée. Dans sa version la plus simple, le pressoir comporte des moyens 10 de drainage formés d'un seul canal de drainage longitudinal en communication fluidique avec les moyens 11 de sortie de jus intermittents et les moyens 12 de sortie de jus permanents. Dans une version plus élaborée, conforme à celle représentée aux figures, le pressoir comporte des moyens 10 de drainage formés d'au moins deux, de préférence, une pluralité de canaux de drainage longitudinaux sensiblement parallèles.

De préférence, au moins certains des canaux de drainage, en particulier les canaux de drainage les plus proches de la ou des ouvertures 13 de sortie des moyens 11 de sortie de jus intermittents sont en communication fluidique à la fois avec les moyens 11 de sortie de jus intermittents et les moyens 12 de sortie de jus permanents, le ou les autres canaux étant en communication fluidique uniquement avec les moyens 12 de sortie de jus permanents.

Pour faciliter cette communication fluidique, il est prévu un collecteur 17 périphérique à la cuve se présentant sous forme d'un conduit du genre goulotte s'étendant sur le pourtour de la cuve 2 sur une partie de la circonférence de la cuve, de préférence en saillie de la paroi 3 latérale de la cuve. Ce conduit collecteur forme un moyen de liaison des conduits de drainage entre eux. Ce conduit collecteur, en communication fluidique avec les conduits de drainage par sa face 17A tournée vers la cuve 2, porte sur sa face 17B, opposée à celle tournée vers la cuve 2, la ou les ouvertures 13 de sortie désaxée(s) des moyens 11 de sortie de jus intermittents, la ou chaque ouverture 13 de sortie formant une ouverture de sortie radiale à ladite cuve 2.

De préférence, le collecteur 17 s'étend sur le pourtour de la cuve 2, à cheval sur la chambre 7 de commande et la chambre 6 de pressurage, lesdites ouvertures 13 de sortie désaxées étant disposées sur le collecteur 13, l'une en regard de la chambre 7 de commande, l'autre ou les autres en regard de la chambre 6 de pressurage. En variante, il peut également être prévu d'équiper chaque canal de drainage d'une ouverture 13 de sortie radiale à la cuve, désaxée, indépendante des autres ouvertures.

L'installation peut encore comporter un ensemble 25 d'admission d'un gaz inerte dans la chambre de pressurage. Cet ensemble 25 d'admission d'un gaz inerte ne sera pas décrit en détail. Cet ensemble comporte un réservoir de gaz inerte relié au raccord 14 tournant de la cuve via le réservoir 20 de collecte. A cet effet, une liaison supplémentaire obturable entre réservoir 20 de collecte et raccord 14 tournant est prévue. Par ailleurs, un système de vannes permet de relier le réservoir 20 de collecte indifféremment à la réserve de gaz inerte ou à l'atmosphère. Enfin, le réservoir 20 de collecte est muni d'un orifice 24 de vidange obturable piloté par les moyens de pilotage de l'installation. La vidange peut s'opérer par écoulement gravitaire ou pompage.

Grâce à un tel pressoir, l'opération de pressurage s'opère tel que suit. On raccorde dans un premier temps le réservoir 20 de collecte à la cuve, via le raccord 14 tournant.

Une fois le réservoir 20 de collecte raccordé à la cuve, on peut procéder au remplissage de la cuve en matière à presser. Avant de remplir la chambre de pressurage en matière telle que de la vendange, on aspire à l'aide de moyens d'aspiration, par l'entrée d'air équipant la chambre de commande, l'air, ou tout autre agent de pression équivalent, hors de la chambre de commande de la cuve de sorte que le vide s'y produit et que la membrane se plaque contre la moitié de la paroi latérale et des flasques de la cuve servant à la délimitation de la chambre de commande. Le remplissage de la cuve du pressoir avec la matière à presser peut s'opérer soit par au moins une porte dont est équipée la chambre de pressurage, en particulier la paroi latérale servant de la cuve à la délimitation de la chambre de pressurage, soit par le dispositif d'amenée axial, coaxial aux deux portions tubulaires constitutives du raccord 14 tournant de la cuve pour permettre un remplissage pendant la rotation de la cuve. Durant cette phase de remplissage, l'une ou l'ouverture 13 de sortie obturable des moyens de sortie de jus intermittents peut permettre un écoulement des jus libres hors de la cuve à l'état raccordé de ladite ouverture 13 de sortie au réservoir 20 de collecte via le connecteur 19. Pendant cette phase de remplissage, les moyens de sortie de jus permanents forment par la sortie axiale, à la fois un moyen complémentaire de sortie de jus et un moyen d'équilibrage des pressions entre la cuve du pressoir et le réservoir de collecte des jus. Lorsque le remplissage est terminé, le programme d'extraction des jus par pressurage peut être lancé. Pour réaliser le pressurage, une fois le remplissage effectué, on alimente en air ou en agent de pression équivalent la chambre 7 de commande de sorte que la matière qui est présente dans la chambre de pressurage est appliquée contre les moyens 10 du drainage et mise sous pression. Il en résulte que la partie liquide de cette matière s'écoule au travers des moyens de drainage tandis que la partie solide reste dans la cuve en dehors des moyens 10 de drainage.

En général, on procède à plusieurs phases de mise sous pression de la matière telle que de la vendange, les phases de pressurage étant séparées d'une part par des phases de compression ou de vide au cours desquelles on écarte la membrane des moyens 10 de drainage comme mentionné ci-dessus et d'autre part par des phases d'émiettage au cours desquelles on fait tourner la cuve autour de son axe pour disloquer le gâteau de matière qui se forme sous l'effet de la pression. En fonction du programme retenu, les phases de pressurage peuvent alterner avec des phases de compression et d'émiettage. Pour vider la cuve, une fois le pressurage effectué, on ouvre la porte équipant la paroi latérale de la cuve et on fait tourner la cuve de sorte que la partie solide restant dans la chambre de pressurage s'évacue progressivement au travers de l'orifice démasqué par la porte. Pour éviter d'endommager la membrane, le vide est fait dans la chambre de commande lors des phases d'émiettage et de vidage de la cuve. Lorsque le pressoir comporte un ensemble d'admission d'un gaz inerte dans la chambre de pressurage, et que la partie liquide de la matière à traiter craint le contact avec l'air, cet ensemble permet d'injecter un gaz inerte à l'intérieur de la cuve. Ce gaz pénètre par la chambre annulaire délimitée par le raccord tournant et rejoint la cuve via les moyens de drainage.

Une telle injection de gaz peut s'effectuer avant et/ou après le remplissage de la cuve avec la matière à traiter, voire pendant les phases d'émiettage. A nouveau, les moyens de pilotage de la cuve peuvent intervenir à ce stade pour contrôler le fonctionnement des différents organes d'actionnement, en particulier des organes d'obturation de l'ensemble d'admission de gaz inerte dans la chambre de pressurage, ces organes d'obturation étant disposés entre raccord tournant et réserve de gaz interne ou de l'organe d'obturation disposé entre le réservoir 20 de collecte et le raccord 14 tournant pour permettre une injection de gaz inerte dans la cuve en dehors des phases de sortie des jus par le raccord tournant.

Plus précisément, l'injection de gaz peut-être réalisée selon deux moyens soit par injection de gaz par les drains 10, soit par l'échange généré par les différences de pression entre la cuve 2, le réservoir de collecteur 20 et l'ensemble d'admission de gaz inerte 25 à travers le raccord tournant 14, les conduits 18 et les drains 10. En fonction de la phase de fonctionnement, l'un ou l'autre des moyens sera utilisé. Cette injection de gaz aura principalement lieu lors de la décompression de la cuve avant les phases d'émiettage.

## Revendications

1. Pressoir (1), de préférence pneumatique, pour séparer les parties solide et liquide, encore appelée jus, d'une matière, telle que de la vendange, ledit pressoir (1) comportant une cuve (2) présentant une paroi (3) latérale cylindrique fermée à ses deux extrémités opposées par un flasque (4), un châssis (9) support sur lequel la cuve (2) est disposée à l'horizontale et est montée à rotation autour de son axe (8) longitudinal, des moyens (10) de drainage des jus contenus dans la cuve (2) et, des moyens (11, 12) de sortie des jus en communication fluidique avec lesdits moyens (10) de drainage, ces moyens (11, 12) de sortie des jus étant raccordables à un réservoir (20) de collecte pour un transfert des jus quittant la cuve par lesdits moyens (10) de drainage vers ledit réservoir (20) de collecte, **caractérisé** où les moyens (11, 12) de sortie des jus comprennent des moyens (12) de sortie de jus, dits permanents, comportant au moins un raccord (14) tournant disposé au niveau de l'axe de rotation de la cuve (2), ce raccord (14) tournant comportant au moins deux orifices, l'un (15) pour le raccordement aux moyens (10) de drainage, l'autre (16) apte à être raccordé au réservoir (20) de collecte,
**caractérisé en ce que** les moyens (11, 12) de sortie des jus comprennent aussi des moyens (11) de sortie de jus, dits intermittents, comportant au moins une ouverture (13) de sortie obturable, désaxée, positionnable en un point bas de la cuve (2) dans une position angulaire prédéterminée, dite position de pressurage, de la cuve en vue de former une sortie de fluide au moins par écoulement gravitaire.

2. Pressoir (1) selon la revendication 1,
**caractérisé en ce que** les moyens (10) de drainage se présentent sous forme d'au moins une goulotte ou portion de conduit analogue, allongée, ajourée, montée dans la cuve (2) le long d'une génératrice de la cuve (2), dans une zone angulaire de la cuve (2) formant la partie inférieure de la cuve, lorsque la cuve occupe une position prédéterminée de pressurage, pour former un canal longitudinal de drainage pour les jus extraits de la matière pressée, le ou chaque canal longitudinal de drainage étant en communication fluidique avec les moyens (12) de sortie de jus permanents et/ou les moyens (11) de sortie de jus intermittents.

3. Pressoir (1) selon la revendication 2,
**caractérisé en ce que** les moyens (10) de drainage comportent au moins deux, de préférence une pluralité de, canaux de drainage longitudinaux, au moins l'un des canaux de drainage étant en communication fluidique à la fois avec les moyens (11) de sortie de jus intermittents et les moyens (12) de sortie de jus permanents.

4. Pressoir (1) selon la revendication 3, du type comportant au moins une pluralité de canaux de drainage longitudinaux,
**caractérisé en ce qu'**au moins certains des canaux de drainage, de préférence les canaux de drainage les plus proches de la ou des ouvertures (13) de sortie des moyens (11) de sortie de jus intermittents sont en communication fluidique à la fois avec les moyens (11) de sortie de jus intermittents et les moyens (12) de sortie de jus permanents, le ou les autres canaux étant en communication fluidique uniquement avec les moyens (12) de sortie de jus permanents.

5. Pressoir (1) selon l'une des revendications 2 à 4, du type comportant au moins deux canaux de drainage longitudinaux sensiblement parallèles, **caractérisé en ce que** les canaux de drainage sont en communication fluidique avec la ou chaque ouverture (13) de sortie désaxée desdits moyens (11) de sortie de jus intermittents par l'intermédiaire d'un collecteur (17) périphérique à la cuve se présentant sous forme d'un conduit du genre goulotte s'étendant sur le pourtour de la cuve (2) sur une partie de la circonférence de la cuve, de préférence en saillie de la paroi (3) latérale de la cuve, ce conduit collecteur en communication fluidique avec les conduits de drainage par sa face (17A) tournée vers la cuve (2) portant sur sa face (17B), opposée à celle tournée vers la cuve (2), la ou les ouvertures (13) de sortie désaxée(s) des moyens (11) de sortie de jus intermittents, la ou chaque ouverture (13) de sortie formant une ouverture de sortie radiale à ladite cuve (2).

6. Pressoir (1) selon la revendication 5, ledit pressoir étant un pressoir pneumatique à membrane (5), ladite membrane (5) divisant la cuve (2) en une chambre (6) de pressurage contenant les moyens (10) de drainage et une chambre (7) de commande,
**caractérisé en ce que** les moyens (11) de sortie de jus intermittents comportent, réparties circonférentiellement, au moins deux ouvertures (13) de sortie obturables, désaxées, positionnables, chacune en un point bas de la cuve (2) dans une position angulaire prédéterminée, dite position de pressurage, de la cuve en vue de former une sortie de fluide au moins par écoulement gravitaire,
et **en ce que** le collecteur (17) s'étend sur le pourtour de la cuve (2) à cheval sur la chambre (7) de commande et la chambre (6) de pressurage, lesdites ouvertures (13) de sortie désaxées étant disposées sur le collecteur (17), l'une en regard de la chambre (7) de commande, l'autre en regard de la chambre (6) de pressurage.

7. Pressoir (1) selon l'une des revendications 2 à 4,
**caractérisé en ce que** le ou au moins l'un des canaux de drainage est en communication fluidique avec les moyens (12) de sortie de jus permanents de la cuve par l'intermédiaire d'un conduit (18) intermédiaire s'étendant radialement le long d'un flasque (4) de la cuve (2), ce conduit (18) intermédiaire se raccordant à l'une de ses extrémités au raccord (14) tournant et à son autre extrémité au canal de drainage.

8. Pressoir (1) selon l'une des revendications 2 à 4,
**caractérisé en ce qu'**il comporte, monté sur le châssis (9) support de cuve, un connecteur (19) se présentant sous forme d'une pièce tubulaire comportant au moins deux ouvertures (19A, 19B), l'une (19A) raccordable au réservoir (20) de collecte, l'autre (19B) positionnée en regard de l'ouverture (13) ou de l'une des ouvertures (13) désaxée(s) de sortie des moyens (11) de sortie de jus intermittents de la cuve quand la cuve (2) occupe la ou une position prédéterminée de pressurage, cette ouverture (19B) du connecteur (19), raccordable à la ou chaque ouverture (13) de sortie désaxée des moyens (11) de sortie de jus intermittents, étant munie d'au moins un joint (21) torique gonflable apte, à l'état gonflé, à entourer à contact d'appui l'ouverture (13) de sortie désaxée de la cuve disposée en regard.

9. Pressoir (1) selon l'une des revendications 1 à 8,
**caractérisé en ce que** le raccord (14) tournant des moyens (12) de sortie de jus permanents est pourvu de moyens de montage amovibles d'un dispositif (22) d'amenée de la matière à presser, le dispositif (22) d'amenée formant, dans son état monté, avec le raccord (14) tournant, une chambre (23) annulaire d'écoulement des jus.

10. Installation du type comprenant un pressoir équipé de moyens (11, 12) de sortie de jus et un réservoir (20) de collecte raccordable aux moyens (11, 12) de sortie de jus du pressoir,
**caractérisé en ce que** le pressoir (1), conforme à l'une des revendications 1 à 9, comporte des moyens (11) de sortie de jus, dits intermittents, et des moyens (12) de sortie des jus, dits permanents, la zone de raccordement des moyens (2) de sortie des jus, dits permanents, au réservoir (20) de collecte étant disposée sur le réservoir (20) de collecte à un niveau supérieur à la zone de raccordement des moyens (11) de sortie de jus, dits intermittents, audit réservoir (20) de collecte.

## Claims

1. A press (1), preferably pneumatic, for separating the solid and liquid parts, also called juice, of a material, such as from the grape harvest, said press (1) comprising a vat (2) having a cylindrical side wall (3) closed at its two opposite ends by a flange (4), a support chassis (9) on which the vat (2) is arranged horizontally and is rotatably mounted around its longitudinal axis (8), means (10) for draining the juices contained in the vat (2), and outlet means (11, 12) for the juices being in fluid communication with said drainage means (10), said outlet means (11, 12) for the juices being connectable to a collection reservoir (20) for a transfer of the juices leaving the vat by said drainage means (10) toward said collection reservoir (20), where the outlet means (11, 12) of the juices comprise so-called permanent juice outlet means (12) comprising at least one rotary connector (14) positioned at the axis of rotation of the vat (2), said rotary connector (14) comprising at least two openings, one (15) for connection to the drainage means (10), the other (16) being able to be connected to the collection reservoir (20),
**characterized in that** the outlet means (11, 12) of the juices also comprise so-called intermittent juice outlet means (11), comprising at least one coverable outlet opening (13), off-axis, positionable at a low point of the vat (2) in a predetermined angular position, called pressuring position, of the vat in order to form a fluid outlet at least through gravitational flow.

2. The press (1) according to claim 1,
**characterized in that** the drainage means (10) assume the form of at least one neck or similar conduit portion, elongated, openwork, mounted in the vat (2) along a generatrix of the vat (2), in an angular zone of the vat (2) forming the bottom portion of the vat, when the vat occupies a predetermined pressuring position, to form a longitudinal drainage channel for the juices extracted from the pressed material, the or each longitudinal drainage channel being in fluid communication with the permanent juice outlet means (12) and/or the intermittent juice outlet means (11).

3. The press (1) according to claim 2,
**characterized in that** the drainage means (10) comprise at least two, preferably several longitudinal drainage channels, at least one of the drainage channels being in fluid communication both with the intermittent juice outlet means (11) and the permanent juice outlet means (12).

4. The press (1) according to claim 3, of the type comprising at least a plurality of longitudinal drainage channels,
**characterized in that** at least some of the drainage channels, preferably the drainage channels closest to the outlet opening(s) (13) of the intermittent juice outlet means (11), are in fluid communication both with the intermittent juice outlet means (11) and the permanent juice outlet means (12), the other channel(s) being in fluid communication only with the permanent juice outlet means (12).

5. The press (1) according to one of claims 2 to 4, of the type comprising at least two substantially parallel longitudinal drainage channels,
**characterized in that** the drainage channels are in fluid communication with the or each off-axis outlet opening (13) of said intermittent juice outlet means (11) via a collector (17) peripheral to the vat assuming the form of a conduit of the neck type extending over the perimeter of the vat (2) on part of the circumference of the vat, preferably protruding from the lateral wall (3) of the vat, this collector conduit in fluid communication with the drainage conduits by its surface (17A) turned toward the vat (2) bearing on its surface (17B), opposite that turned toward the vat (2), the off-axis outlet opening(s) (13) of the intermittent juice outlet means (11), the or each outlet opening (13) forming an outlet opening radial to said vat (2).

6. The press (1) according to claim 5, said press being a membrane pneumatic press (5), said membrane (5) dividing the vat (2) into a pressuring chamber (6) containing the drainage means (10) and a control chamber (7),
**characterized in that** the intermittent juice outlet means (11) comprise, distributed circumferentially, at least two coverable, off-axis, positionable outlet openings (13), each at a low point of the vat (2) in a predetermined angular position, called pressuring position, of the vat so as to form a fluid outlet at least by gravitational flow,
and **in that** the collector (17) extends on the perimeter of the vat (2) overlapping on the control chamber (7) and the pressuring chamber (6), said off-axis outlet openings (13) being positioned on the collector (17), one opposite the control chamber (7), the other opposite the pressuring chamber (6).

7. The press (1) according to one of claims 2 to 4,
**characterized in that** the or at least one of the drainage channels is in fluid communication with the permanent juice outlet means (12) of the vat via an intermediate conduit (18) extending radially along a flange (4) of the vat (2), this intermediate conduit (18) connecting at one of its ends to the rotary connector (14) and at its other end to the drainage channel.

8. The press (1) according to one of claims 2 to 4,
**characterized in that** it comprises, mounted on the vat support chassis (9), a connector (19) assuming the form of a tubular piece comprising at least two openings (19A, 19B), one (19A) connectable to the collection reservoir (20), the other (19B) positioned opposite the opening (13) or one of the off-axis outlet openings (13) of the intermittent juice outlet means (11) of the vat when the vat (2) occupies the or a predetermined pressuring position, this opening (19B) of the connector (19), connectable to the or each off-axis outlet opening (13) of the intermittent juice outlet means (11), being provided with at least one inflatable O-ring (21) capable, in the inflated state, of surrounding, in bearing contact, the off-axis outlet opening (13) of the vat positioned opposite.

9. The press (1) according to one of claims 1 to 8,
**characterized in that** the rotary connector (14) of the permanent juice outlet means (12) is provided with removable mounting means for an intake device (22) of the material to be pressed, the intake device (22) forming, in its assembled state, with the rotary joint (14), an annular flow chamber (23) for the juices.

10. A facility of the type comprising a press equipped with juice outlet means (11, 12) and a collection reservoir (20) that can be connected to the juice outlet means (11, 12) of the press,
**characterized in that** the press (1), according to one of claims 1 to 9, comprises so-called intermittent juice outlet means (11), and so-called permanent juice outlet means (12), the connecting zone of the so-called permanent juice outlet means (2) to the collection reservoir (20) being positioned on the collection reservoir (20) at a level higher than the connection zone of the so-called intermittent juice outlet means (11), to said collection reservoir (20).

## Patentansprüche

1. Presse (1), vorzugsweise pneumatische, zum Abscheiden der festen und flüssigen, auch Saft genannten Teile einer Masse, wie geernteter Trauben, wobei die Presse (1) einen Tank (2) aufweist, der eine zylindrische Seitenwand (3) aufweist, die an ihren beiden gegenüberliegenden Enden durch ein Blech (4) verschlossen ist, ein Tragegestell (9), auf dem der Tank (2) horizontal angeordnet und rotierend um seine Längsachse (8) montiert ist, Ableitmittel (10) der in dem Tank (2) enthaltenen Säfte und Ausgangsmittel (11, 12) der Säfte in fluidischer Kommunikation mit den Ableitmitteln (10), wobei diese Ausgangsmittel (11, 12) der Säfte für eine Weiterleitung der Säfte, die den Tank verlassen, durch die Ableitmittel in das Sammelreservoir (20) an ein Sammelreservoir (20) koppelbar sind, wobei die Ausgangsmittel (11, 12) der Säfte sogenannte permanente Saftausgangsmittel (12) umfassen, die mindestens einen drehbaren Anschluss (14) aufweisen, der auf Ebene der Rotationsachse des Tanks (2) angeordnet ist, wobei dieser drehbare Anschluss (14) mindestens zwei Öffnungen aufweist, eine (15) für den Anschluss an die Ableitmittel (10), wobei die andere (16) imstande ist, mit dem Sammelreservoir (20) gekoppelt zu sein,
**dadurch gekennzeichnet, dass** die Ausgangsmittel (11, 12) der Säfte ebenfalls sogenannte intermittierende Saftausgangsmittel (11) umfassen, die mindestens eine verschließbare axial verschobene Ausgangsöffnung (13) aufweisen, die an einem unteren Punkt des Tanks (2) in einer vorbestimmten, als Pressposition bezeichneten Winkelposition des Tanks positionierbar ist, um zumindest einen Fluidausgang durch Schwerkraftabfließen zu bilden.

2. Presse (1) nach Anspruch 1,
**dadurch gekennzeichnet, dass** die Ableitmittel (10) die Form mindestens einer Rinne oder eines analogen länglichen durchbrochenen Leitungsabschnitts haben, die im Tank (2) entlang einer Mantellinie des Tanks (2) in einer Winkelzone des Tanks (2), die den unteren Teil des Tanks bildet, montiert ist, wenn der Tank eine vorbestimmte Pressposition einnimmt, um für die aus der gepressten Masse extrahierten Säfte einen Längs-Ableitkanal zu bilden, wobei der oder jeder Längs-Ableitkanal in fluidischer Kommunikation mit den permanenten Saftausgangsmittel (12) und/oder den intermittierenden Saftausgangsmitteln (11) ist.

3. Presse (1) nach Anspruch 2,
**dadurch gekennzeichnet, dass** die Ableitmittel (10) mindestens zwei, vorzugsweise eine Mehrzahl von Längs-Ableitkanälen aufweisen, wobei mindestens einer der Ableitkanäle in fluidischer Kommunikation sowohl mit den intermittierenden Saftausgangsmitteln (11) als auch mit den permanenten Saftausgangsmitteln (12) ist.

4. Presse (1) nach Anspruch 3 der Bauart, die mindestens eine Mehrzahl von Längs-Ableitkanälen aufweist,
**dadurch gekennzeichnet, dass** mindestens einige der Ableitkanäle, vorzugsweise die Ableitkanäle, die der oder den Ausgangsöffnungen (13) der intermittierenden Saftausgangsmittel (11) am nächsten sind, in fluidischer Kommunikation sowohl mit den intermittierenden Saftausgangsmitteln (11) als auch mit den permanenten Saftausgangsmitteln (12) sind, wobei der oder die anderen Kanäle nur mit den permanenten Saftausgangsmitteln (12) in fluidischer Kommunikation sind.

5. Presse (1) nach einem der Ansprüche 2 bis 4 der Bauart, die mindestens zwei etwa parallele Längs-Ableitkanäle aufweist,
**dadurch gekennzeichnet, dass** die Ableitkanäle mit der oder jeder axial verschobenen Ausgangsöffnung (13) der intermittierenden Saftausgangsmittel (11) über einen zum Tank peripheren Sammler (17) in fluidischer Kommunikation sind, der sich in Form einer Leitung in der Art einer Rinne darstellt, die sich auf dem Umfang des Tanks (2) über einen Teil des Umkreises des Tanks erstreckt, vorzugsweise über die Seitenwand (3) des Tanks hervorspringend, wobei diese Sammelleitung, die mit den Ableitleitungen über ihre zum Tank (2) zeigende Seite (17A) in fluidischer Kommunikation ist, auf ihrer Seite (17B), die der gegenüberliegt, die zum Tank (2) zeigt, die axial verschobene(n) Ausgangsöffnung(en) (13) der intermittierenden Saftausgangsmittel (11) trägt, wobei die oder jede Ausgangsöffnung (13) eine zu dem Tank (2) radiale Ausgangsöffnung bildet.

6. Presse (1) nach Anspruch 5, wobei die Presse eine pneumatische Presse mit Membran (5) ist, wobei die Membran (5) den Tank (2) in eine Presskammer (6), die die Ableitmittel (10) enthält, und in eine Steuerkammer (7) teilt,
**dadurch gekennzeichnet, dass** die intermittierenden Saftableitmittel auf dem Umkreis verteilt mindestens zwei axial verschobene verschließbare Ausgangsöffnungen (13) aufweisen, die jeweils an einem tiefen Punkt des Tanks (2) in einer vorbestimmten, als Pressposition bezeichneten Winkelposition des Tanks positionierbar sind, um zumindest einen Fluidausgang durch Schwerkraftabfließen zu bilden,
und **dadurch**, dass sich der Sammler (17) auf dem Umfang des Tanks (2) auf der Steuerkammer (7) und der Presskammer (6) aufsitzend erstreckt, wobei die axial verschobenen Ausgangsöffnungen (13) auf dem Sammler (17) angeordnet sind, eine gegenüber der Steuerkammer (7), die andere gegenüber der Presskammer (6).

7. Presse (1) nach einem der Ansprüche 2 bis 4,
**dadurch gekennzeichnet, dass** der oder mindestens einer der Ableitkanäle in fluidischer Kommunikation mit den permanenten Saftableitmitteln (12) des Tanks über eine Verbindungsleitung (18) ist, die sich radial entlang eines Blechs (4) des Tanks (2) erstreckt, wobei sich diese Zwischenleitung (18) mit einem ihrer Enden an den drehbaren Anschluss (14) anschließt und mit ihrem anderen Ende an den Ableitkanal.

8. Presse (1) nach einem der Ansprüche 2 bis 4,
**dadurch gekennzeichnet, dass** sie ein auf dem Tragegestell (9) des Tanks montiertes Verbindungsstück (19) aufweist, das die Form eines rohrförmigen Teils hat, das mindestens zwei Öffnungen (19A, 19B) aufweist, wobei eine (19A) an das Sammelreservoir (20) anschließbar ist und die andere (19B) gegenüber der axial verschobenen Ausgangsöffnung (13) oder einer der axial verschobenen Ausgangsöffnungen (13) der intermittierenden Saftausgangsmittel (11) des Tanks positioniert ist, wenn der Tank (2) die oder eine vorbestimmte Pressposition einnimmt, wobei diese Öffnung (19B) des an die oder jede axial verschobene Ausgangsöffnung (13) der intermittierenden Saftausgangsmittel (11) anschließbaren Verbindungsstücks (19) mit mindestens einer aufblasbaren torischen Dichtung (21) ausgestattet ist, die im aufgeblasenen Zustand imstande ist, die gegenüberliegende axial verschobene Ausgangsöffnung (13) des Tanks kontaktaufliegend zu umgeben.

9. Presse (1) nach einem der Ansprüche 1 bis 8,
**dadurch gekennzeichnet, dass** der drehbare Anschluss (14) der permanenten Saftausgangsmittel (12) mit lösbaren Montagemitteln einer Zufuhrvorrichtung (22) der zu pressenden Masse ausgestattet ist, wobei die Zufuhrvorrichtung (22) in ihrem montierten Zustand mit dem drehbaren Anschluss (14) eine ringförmige Saftabflusskammer (23) bildet.

10. Anlage der Bauart, die eine Presse umfasst, die mit Saftausgangsmitteln (11, 12) und einem an Saftausgangsmittel (11, 12) der Presse anschließbaren Sammelreservoir (20) ausgestattet ist,
**dadurch gekennzeichnet, dass** die Presse (1), die einem der Ansprüche 1 bis 9 entspricht, sogenannte intermittierende Saftausgangsmittel (11) und sogenannte permanente Saftausgangsmittel (12) aufweist, wobei die Anschlusszone am Sammelreservoir (20) der sogenannten permanenten Saftausgangsmittel (2) am Sammelreservoir (20) auf einer Ebene über der Anschlusszone am Sammelreservoir (20) der sogenannten intermittierenden Saftausgangsmittel (11) angeordnet ist.
